# EUROPEAN PATENT SPECIFICATION

(11) **EP 1 981 689 B1**
(45) Date of publication and mention of the grant of the patent: **14.04.2010**
(21) Application number: 06831527.4
(22) Date of filing: 22.12.2006
(51) Int. Cl.: B29B 17/02, A62D 3/00, C08J 11/10

(54) **DEVICE FOR DECOMPOSING PVC BASED AND OTHER PLASTIC WASTE MATERIALS WITH HIGH HALOGEN CONTENT**
VORRICHTUNG ZUM ZERSETZEN VON AUF PVC BASIERENDEN UND ANDEREN KUNSTSTOFFABFALLMATERIALIEN MIT HOHEM HALOGENGEHALT
DISPOSITIF DE DECOMPOSITION DE MATERIAUX RESIDUAIRES A BASE DE PVC ET D'AUTRES PLASTIQUES A HAUTE TENEUR EN HALOGENES

(30) Priority: 08.02.2006 HU 0600028 U
(43) Date of publication of application: 22.10.2008
(73) Proprietor: AHD Vagyonkezelö és Tanácsadó Kft., Domoszló u. 60 1037 Budapest (HU)
(72) Inventor: Boday, Adam, Janos, 2141 Csömör (HU); Szinay, Zoltan, 1172 Budapest (HU); Csokai, Viktor, 2310 Szigetszentmiklos (HU)
(74) Representative: Derzsi, Katalin
(86) International application number: PCT/HU2006/000128
(87) International publication number: WO 2007/091108

(56) References cited:
- EP-A1- 0 074 344
- DE-A1- 3 242 609
- DE-A1- 19 722 586
- US-A- 4 162 995
- US-A- 4 339 358
- US-A- 4 587 098

## Description

The present invention relates to a device for decomposing PVC based and other plastic waste materials with high halogen content. The subsequent utilization of the hydrochloric acid obtained from these materials, more specifically the realization of application of the hydrochloric acid in the acid hydrolysis mainly of polyurethane foam is made possible.

It is known that natural materials have been replaced completely or partly by polymers almost everywhere in life by the 20^{th} century technology. The diversity of the fields of utility of plastic materials has gone with the continuous broadening of the field of applicability and has entailed an increase in the utilized polymer quantities. This phenomenon has been accompanied by the failure of the civilization to decide what to do with its end-products, so the disposal, i.e. decomposition of the produced waste in an ecologically beneficial and economical way has become an increasingly important issue.

It can be stated that the appearance en masse of materials stored improperly, included especially plastic materials generates environmental concerns which are harder and harder to overcome, as beside having been narrowed of the living-space both natural values and urbane conditions have been damaged steadily.

Several valuable publications have been disclosed aiming to solve the above problem, relating mainly to depolymerization carried out via pyrolysis which process complemented with alkaline neutralization.

According to EP 0125383 for example halogen containing organic waste is processed in alkaline-earth metal base and alkaline-earth metal halogenide salt melt in oxidative atmosphere. The process takes place in a chamber, a special single-purpose device is not described. The process has the disadvantage of the high chamber temperature and the required unjustified great quantity of expensive alkaline-earth metal.

EP 0111081 describes a method and a device for pirolysing waste materials. In this process the material to be treated is calcined at temperatures of 400 to 600°C in a drum-type furnace, then caustic lime is added. The developing gases, however, still have high acid content. The invention propose neither a method nor a device eliminating this acid content. This solution is therefore unsatisfactory.

Further, according to well-known solutions of Japanese designers the waste material is calcined under pressure in a generally alkaline solution in the presence of metal salts. The plurality of these methods is suitable for the partial elimination of halogens. A single-purpose device suitable for PVC or other plastic materials with high halogen content, however, is not known. PVC waste was mixed with other wastes, as it could not be processed self-contained because of its high chlorine content.

According to DE 22 60 392 a dehydro-halogenation is carried out at temperatures of 200 to 300°C, the quality of the obtained product, however, restrains the possibilities of further utilization. A further disadvantage is the need of evaporating the water. A satisfactory effectiveness of this evaporating cannot be realised without great energy consumption. Thus it can be stated in conclusion that this process is expensive and uneconomical.

As to the entirety of the above cited solutions, it can be stated that hydrogen chloride gas with a temperature of 300°C develops in the device, and the temperature of the acidic gas exiting the device is also high, destroying the reactor wall, and also impairing the conduit.

A part of the solutions cited as state of the art can be realised commercially only to a limited degree, other solutions are uneconomical, the device construction is unhandy, and therefore not even been realized.

An apparatus for decomposing PVC is known from document DE 19 722 586 A1.

It is therefore an object of the present invention to eliminate the disadvantages resulting from the state of the art by creating a device requiring low investment costs, enabling the treating of PVC wastes and other wastes with high chlorine content and not producing waste products (acidic gases) damaging the environment.

The present invention is based on the knowledge that degradation of PVC wastes and other plastic material wastes with high halogen content can take place by using a suitable device, wherein the hydrogen chloride gas out of the developing decomposition products is transformed in hydrochloric acid utilizable in other chemical processes, and is obtained in this way and/or it is expediently conducted directly to a reaction where it can be utilizes.

The device according the invention comprises charging, processing, separating and discharging units.

A substantial unit of the device is the heated ladle forming the part of the processing unit, including a tilting dome and a lower part. This lower part is hemisphere like shaped with an opening in its bottom suitable for slag discharging. The dome comprises a charging opening and rotatable conical mixer. The lower part of the ladle has preferably a double wall jacket for the flow of the heating fluid, expediently oil, and the acid resistant steel material of its inner wall is tantalum coated. Inlet nipples for introducing media to the reaction and outlet nipples for the obtained products are formed on the ladle jacket and the device comprises conduits suitable for transporting the yielded products to the units suitable for further processing.

The device comprises a vapour conduit on the upper dome part of the ladle for discharging the vapour containing hydrochloric acid vapours. Preferably the vapour conduit is made of acid resistant ceramic tube.

The conical mixer can be substantially an anchor shaped symmetrical mixing blade.

The device includes a countercurrent water absorber for absorbing at least a part of the hydrogen chloride gas developed in the reaction. On the bottom of said absorber there is a conduit connected to a HCl/oil separator. An alkali absorber is arranged downstream of said countercurrent water absorber.

The device comprises a conduit transporting the yielded hydrochloric acid solution to the hydrochloric acid tank and preferably has a PUR reactor downstream of said tank connected to it by a conduit.

The solution according to the present invention is explained in greater detail below with the aid of non limiting drawings which show the following:
Figure 1 shows the ladle partly in view, partly in section,
Figure 2 shows the units of the device for the entire technology in a flowchart.

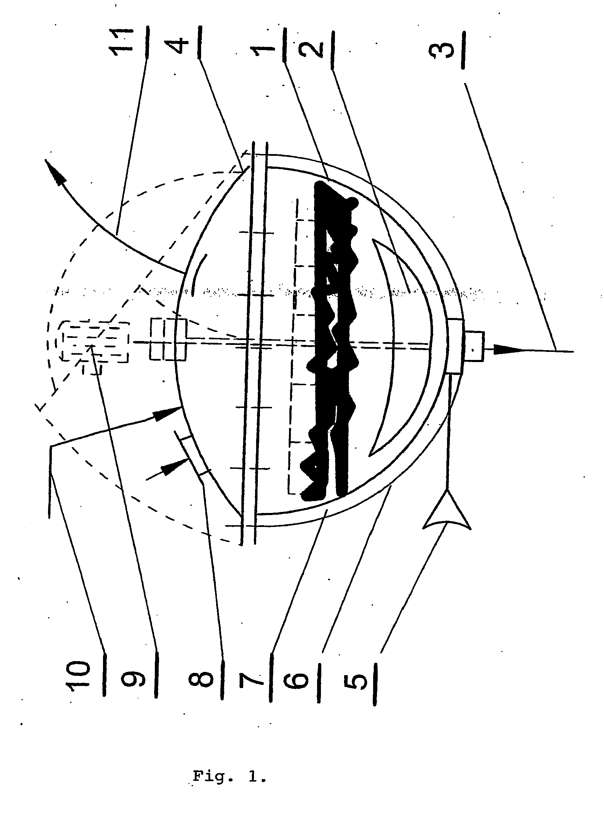

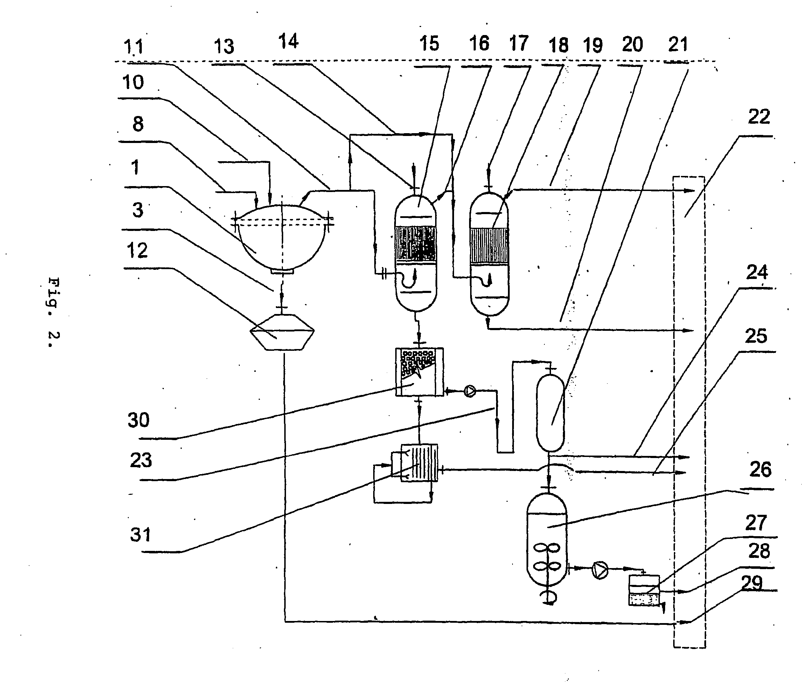

Figure 1 shows accordingly the ladle 1 the hemisphere shaped lower part of which is made from acid-resistant steel, and its inner side is tantalum coated. The ladle 1 and the heating jacket 6 form a double wall defining the calorifier oil space 7. The lower part of the ladle 1 is provided with a slag dispensing lock 5 in the bottom of the vessel. Under the slag dispensing lock 5 a slag conduit 3 leading to the slag tank 12 shown in Fig. 2 is placed. The discharge conduit 29 (illustrated in Fig. 2) starts from the slag tank 12. The ladle cover 4 is formed by a lockable and tilting dome on which a charging nipple 8 is mounted. Adjacent to the charging nipple 8 an inlet connection 10 of inert gas is arranged on the ladle cover 4, whereas a vapour conduit 11 is installed opposite. The dredging means extending from the central part of the inner side of the ladle cover 4 is formed substantially by an anchor shaped symmetrical mixing blade 2 the rotary speed of which can be varied (controlled). Mixing and driving elements 9 driving the mixing blade 2 are connected from above to the mixing blade 2 on the outer housing of the ladle cover 4.

Fig. 2 illustrates the said slag tank 12 located under the ladle 1. Upstream of the connection to the countercurrent water absorber 15 the vapour conduit 11 on the ladle cover 4 branches towards the conduit 14 connected to the alkali absorber 18 provided with an alkali conduit 17. A conduit 16 is provided for removing the head product of the countercurrent water absorber 15. Conduit 19 serves for removing the hydrocarbons from the alkali absorber 18, and conduit 20 serves for blowing out the produced hydrochloric acid. Countercurrent water absorber 15 is provided with a water conduit 13 connected to its dome, and has a drain opening on its lower point under which the separator 30 is positioned for separating the HCl/oil mixture. The hydrochloric acid receptacle 21 is attached to the separator 30 through a salt acid conduit 23. Oil enters the oil draining conduit 25 through an alkali washer 31. A conduit 24 is connected to the hydrochloric acid receptacle 21 for blowing out the hydrochloric acid receptacle.

Intermediate products are discharged by the processes taking place in ladle 1 into the output field 22 marked with dotted lines. The yielded hydrochloric acid can be used in the PUR reactor 26. The product of the PUR reactor 26 enters the phase separator 27 and the polyol draining 28.

Concerning the technology the design of the ladle 1 is of great importance. As mentioned above said ladle 1 is of acid resistant steel with a tantalum coating on its inner surface eliminating the aggressive action of the developing hydrogen chloride gas of high temperature still present at the process beginning, which would cause the fast wearing of the chamber wall. Because of its hemisphere like shaping the lower part of the ladle 1 can receive a great quantity of chips in relation to its volume, and the slag material can be removed on the deepest point in a preferred way by means of it. The slag dispensing lock 5 is mounted horizontally on the ladle 1 bottom by a releasable fastening. The solid rest is discharged from here through the slag conduit 3 after a number of charges.

The ladle cover 4 is individually constructed and it is flat, lockable and can be tilted. The charging nipple 8 is mounted on the cover 4 and through said charging nipple PVC chips with grain size of 4 to 8 mm or other plastic material with high halogen content is charged. Charge can be treated as liquid in inert gas, in waste oil, or mixed with grinds.

The mixing blade 2 fixed to the ladle cover 4 has an anchor like symmetrical shape. Its rotary movement is controllable and its speed is variable so that the material held in ladle 1 can be kept moving by means of the mixing blade 2 mixing it in the required extent.

The mixing blade 2 is placed with an axle guide using a corresponding sealing system. The nipple of the vapour conduit 11 discharging the products is also provided with a special graphite plate sealing. The products are discharged through the vapour conduit 11 with an operating overpressure of 0 to 400 mbars. During the first stage of processing the hydrochloric acid vapours are discharged through vapour conduit 11, and therefore this conduit preferably is made of acid resistant ceramic tube resisting aggressive hot gases. Connection of inert gas 10 - nitrogen - introducing conduit is a releasable fastening. Fluid is heated by means of oil flowing in calorifier oil space 7 ensuring thermal stability, and control enables fast intervention.

In the preheated reaction space of ladle 1 the decomposition of the produced hydrogen chloride gas takes place at temperatures of 290 to 350°C. The process takes place at an operating pressure of 1.2 bar with continuous degassing. Utilizing on the one hand the advantages of the relatively high filler material content of the chips in the case of both PVC and other plastic products with high halogen content and on the other hand the advantages of the applied overpressure it can be ensured that protection is needed against the noxious effects of the developing hydrogen chloride gas only in the initial stage of the process. After applying countercurrent water absorber 15 appearance of hydrogen chloride gas does not have to be taken into consideration. In this way elimination of the aggressive gas from the basic substance is advantageously solved, and then the depolymerisation realised at temperatures 350 to 500°C produces an acid free gas mixture cleaning of which does not require an intensive alkali washing as it does in the case of previous processes.

At the beginning of the cycle the washing solution enriched gradually by the hydrochloric acid introduced in the countercurrent water absorber 15 to merchantable and well doseable concentration of 20 %. Preferably the product enriched to said concentration is stored in plant tanks and discharged in closed conduit.

As already mentioned, upstream of the connection to the countercurrent water absorber 15 the vapour conduit 11 branches towards the conduit 14 going to the alkali absorber. This way the discharge of the hydrocarbon vapours towards the alkali absorber 18 is ensured by a three-way valve in the second stage of the processing. Conduit 16 coming from the countercurrent water absorber 15 enables the neutralization of the head product of said absorber after water prewashing.

Water conduit 13 connected to the dome of countercurrent water absorber 15 is attached preferably by a spray head to the receptacle, and its content is discharged through a bottom opening to the HCl/oil separator 30. Both the countercurrent water absorber 15 and the alkali absorber 18 comprise a quality steel, self supporting receptacle, a column provided with ceramic ring filling along the its longitudinal axis.

The intermediate products are discharged through more technological steps symbolically in the output field 22 by the processes taking place in ladle 1. Product collected in the hydrochloric acid receptacle 21 intended not to be utilized in the PUR reactor 26 appears here, as well. Oil draining 25 goes to the plant tank. Phase separator 27 for separating the polyol/aqueous phase (polyol is an initial material of PUR production) is a commercially available device dimensioned to the specific density and viscosity of the two phases. The polyol draining 28 serves for transporting the secondary raw material of the polyurethane production towards the tank.

Thus in the second stage of the cycle, that is in the depolymerization stage, the polymer chains depending on the temperature and pressure used in the technology are decomposed to H₂, and CH₄, and unsaturated hydrocarbons of different quantities respectively, collected by the separating system. The gas compound is saturated with carbon dioxide gas, as a result of the chemical reaction of the filling material and the developing hydrogen chloride gas, said carbon dioxide gas is separated by compression and freezing-out. The energy carrier gases are received by a compressor station constructed typically similar to the commercial gas blocks used on fuel plants. The small quantity of oil product produced as.side-product is obtained by separating the two phases exiting from the bottom of the water washer.

The use of hydrochloric acid for decomposing the PUR foam is an significant novelty as highly poisonous products are produced during the burning of the material. Thus the disposal of this waste is realized by acid hydrolysis using the hydrochloric acid gained from hydrogen chloride gas obtained as a decomposition product of the PVC, another hazardous material, which makes the whole process ecologically beneficial.

As a further advantage, the decomposition of PUR does not require the application of a receptacle with expensive coating, the operating overpressure of 5 bars, however, requires the dimensioning of the device. The produced materials comprise carbon dioxide, salts of aromatic and aliphatic amines formed with hydrochloric acid and polyol chains which can be fed back in the PUR production.

Thus the present invention solves simultaneously the disposal of two hazardous materials so that one do not have to count on the emission of noxious materials from the burning of PUR, instead the materials are advantageously can be recirculated for processing.

## Claims

1. Device for decomposing PVC based and other plastic waste materials with high halogen content, comprising charging, processing, separating and discharging units, **characterised in that** it comprises a heated ladle (1) forming the part of the processing unit, including a tilting dome and a hemisphere like shaped lower part with an opening in its bottom suitable for slag discharging and provided with a slag dispensing lock (5); the dome comprises a charging nipple (8) for charging the material to be treated and a rotatable conical mixer (2) extending towards the reaction space; the lower part of the ladle (1) has preferably a double wall jacket for the flow of the heating fluid, expediently oil, and the acid resistant steel material of its inner wall is tantalum coated; inlet nipples (10) for introducing media to the reaction and outlet nipples (11) for the obtained products are formed on the ladle jacket and the device comprises conduits (13, 14, 16, 17, 19, 20, 23, 25, 28, 29) suitable for transporting the yielded products to the units suitable for further processing and for discharging the obtained products.

2. Device according to claim 1, **characterised in that** it comprises a vapour conduit (11) on the upper dome part of the ladle (1) for removing the vapour containing hydrochloric acid vapours.

3. Device according to claim 1 and 2, **characterised in that** said vapour conduit (11) is made of acid resistant ceramic tube.

4. Device according to one of the claims 1-3, **characterised in that** said conical mixer is an anchor shaped symmetrical mixing blade (2).

5. Device according to one of the claims 1-4, **characterised in that** it includes a countercurrent water absorber (15) for absorbing at least a part of the hydrogen chlorid gas developed in the reaction, and on the bottom of said absorber there is a conduit connected to the HCl/oil separator (30).

6. Device according to one of the claims 1-5, **characterised in that** downstream of said countercurrent water absorber (15) has an alkali absorber (18).

7. Device according to one of the claims 1-6, **characterised in that** comprises a conduit (23) transporting the yielded hydrochloric acid solution to the hydrochloric acid tank (21), and downstream of said tank (21) has a PUR reactor (26) connected to it by a conduit.

## Patentansprüche

1. Vorrichtung zum Zersetzen von auf PVC basierenden und anderen Kunststoffabfallmaterialien mit hohem Halogengehalt, umfassend Einlade-, Verarbeitungs-, Abscheidungs- und Ausladeeinheiten, **dadurch gekennzeichnet, dass** sie eine beheizte Schaufel (1) umfasst, die Teil der Verarbeitungseinheit ist, die eine Kippkuppel und einen halbkugelförmigen unteren Teil mit einer Öffnung in seinem Boden, die zum Entladen von Schlacke geeignet ist und mit einem Schlackenausgaberiegel (5) versehen ist, umfasst ; die Kuppel umfasst einen Einladenippel (8) zum Einladen des zu verarbeitenden Materials und einen drehbaren kegelförmigen Mischer (2), der sich in Richtung auf den Reaktionsraum erstreckt; der untere Teil des Löffels (1) weist bevorzugt einen doppelten Wandmantel für den Fluss des Heizfluids, zweckmäßigerweise Öl, auf, und das säurebeständige Stahlmaterial seiner Innenwand ist mit Tantal beschichtet; Einlassnippel (10) zum Einführen von Mitteln in die Reaktion und Auslassnippel (11) für die erzielten Produkte werden auf dem Löffelmantel gebildet, und die Vorrichtung umfasst Leitungen (13, 14, 16, 17, 19, 20, 23, 25, 28, 29), die zum Transportieren der erzeugten Produkte zu den Einheiten geeignet sind, die zur Weiterverarbeitung und zum Entladen der erzielten Produkte geeignet sind.

2. Vorrichtung nach Anspruch 1, **dadurch gekennzeichnet, dass** sie eine Dampfleitung (11) auf dem oberen Kuppelteil des Löffels (1) umfasst, um den Dampf zu entfernen, der Salzsäuredämpfe enthält.

3. Vorrichtung nach Anspruch 1 und 2, **dadurch gekennzeichnet, dass** die Dampfleitung (11) aus säurebeständigem Keramikrohr hergestellt wird.

4. Vorrichtung nach einem der Ansprüche 1 bis 3, **dadurch gekennzeichnet, dass** der kegelförmige Mischer ein ankerförmiger symmetrischer Mischflügel (2) ist.

5. Vorrichtung nach einem der Ansprüche 1 bis 4, **dadurch gekennzeichnet, dass** sie einen Gegenstrom-Wasserabsorber (15) umfasst, um mindestens einen Teil des Salzsäuregases zu absorbieren, das sich bei der Reaktion entwickelt, und dass sich auf dem Boden des Absorbers eine Leitung befindet, die an den HCl/Öl-Abscheider (30) angeschlossen ist.

6. Vorrichtung nach einem der Ansprüche 1 bis 5, **dadurch gekennzeichnet, dass** sie stromabwärts vom Gegenstrom-Wasserabsorber (15) einen Alkaliabsorber (18) aufweist.

7. Vorrichtung nach einem der Ansprüche 1 bis 6, **dadurch gekennzeichnet, dass** sie eine Leitung (23) umfasst, welche die erzeugte Salzsäurelösung zum Salzsäuretank (21) transportiert, und dass sie stromabwärts von dem Tank (21) einen PUR-Reaktor (26) aufweist, der daran über eine Leitung angeschlossen ist.

## Revendications

1. Dispositif de décomposition de matériaux résiduaires à base de PVC et d'autres plastiques à haute teneur en halogènes, comprenant des unités de chargement, traitement, séparation et déchargement, **caractérisé en ce qu'**il comprend une poche (1) chauffée, formant la partie de l'unité de traitement, incluant un dôme basculant et une partie inférieure conformée comme un hémisphère, avec en son fond une ouverture convenant pour la décharge de scories et muni d'un élément d'arrêt de distribution de scories (5), le dôme comprenant un manchon de chargement (8), pour charger le matériau devant être traité, et un mélangeur (2) conique rotatif, s'étendant vers l'espace de réaction, la partie inférieure de la poche (1) comprenant de préférence une enveloppe à double paroi, pour l'écoulement du fluide de chauffage, de manière appropriée de l'huile, et le matériau à base d'acier résistant à l'acide de sa paroi intérieure est revêtu de tantale ; des tubulures d'entrée (10), pour introduire des milieux dans la réaction, et des tubulures de sortie (11), pour les produits obtenus, sont formées sur l'enveloppe de poche, et le dispositif comprend des conduits (13, 14, 16, 17, 19, 20, 23, 25, 28, 29), convenant pour transporter les produits générés aux unités convenant pour un traitement supplémentaire et pour décharger les produits obtenus.

2. Dispositif selon la revendication 1, **caractérisé en ce qu'**il comprend un conduit à vapeur (11) sur la partie formant dôme supérieure de la poche (1), de manière à faire s'échapper la vapeur contenant des vapeurs d'acide chlorhydrique.

3. Dispositif selon les revendications 1 et 2, **caractérisé en ce que** ledit conduit à vapeur (11) est formé d'un tube en céramique, résistant à l'acide.

4. Dispositif selon l'une des revendications 1 à 3, **caractérisé en ce que** ledit mélangeur conique est une lame de mélange (2) symétrique en forme d'ancre.

5. Dispositif selon l'une des revendications 1 à 4, **caractérisé en ce qu'**il comprend un absorbeur d'eau à contre-courant (15), pour absorber au moins une partie du chlorure d'hydrogène gazeux développé dans la réaction, et, au fond dudit absorbeur, est disposé un conduit connecté au séparateur HCl/huile (30).

6. Dispositif selon l'une des revendications 1 à 5, **caractérisé en ce qu'**un absorbeur de produits alcalins (18) est installé en aval dudit absorbeur d'eau à contre-courant (15).

7. Dispositif selon l'une des revendications 1 à 6, **caractérisé en ce qu'**il comprend un conduit (23) transportant la solution d'acide chlorhydrique produite au réservoir d'acide chlorhydrique (21) et, en aval dudit réservoir (21), un réacteur à polyuréthane (26) lui étant connecté par un conduit.
